Europäisches Patentamt

European Patent Office

Office européen des brevets

(11) Numéro de publication: **0 305 261 B1**

# FASCICULE DE BREVET EUROPEEN

(45) Date de publication de fascicule du brevet: **30.09.92**   (51) Int. Cl.5: **H04K 1/00**, H04L 7/10

(21) Numéro de dépôt: **88402067.8**

(22) Date de dépôt: **09.08.88**

(54) **Procédé pour la synchronisation rapide de vocodeurs couplés entre eux au moyen de dispositifs de chiffrement et de déchiffrement.**

(30) Priorité: **14.08.87 FR 8711584**

(43) Date de publication de la demande:
**01.03.89 Bulletin 89/09**

(45) Mention de la délivrance du brevet:
**30.09.92 Bulletin 92/40**

(84) Etats contractants désignés:
**DE GB IT**

(56) Documents cités:
EP-A- 0 044 780
GB-A- 1 521 029
GB-A- 2 089 599

IEEE GLOBAL TELECOMMUNICATIONS
CONFERENCE, Communications Broadening
Technology Horizons, Conference Record,
vol. 2, Houston, TX, 1-4 décembre 1986, pages 813-817, IEEE Communications Society
etc., New York, US; A. TAHA et al.: "Speech
encryption in linear predictive coding (LPC)
system"

CONFERENCE PROCEEDINGS OF MILITARY
MICROWAVES'84, 24-26 octobre 1984, Londres, pages 50-54, Microwave Exhibitions
and Publishers Ltd, Tunbridge Wells, Kent,
GB; G.J. PROUDLER: "Bulk encryption for
wideband applications"

(73) Titulaire: **THOMSON-CSF**
**51, Esplanade du Général de Gaulle**
**F-92800 Puteaux(FR)**

(72) Inventeur: **Journeau, Rémy**
**Thomson-CSF SCPI-19, avenue de Messine**
**F-75008 Paris(FR)**

(74) Mandataire: **Lincot, Georges et al**
**THOMSON-CSF SCPI**
**F-92045 PARIS LA DEFENSE CEDEX 67(FR)**

EP 0 305 261 B1

Rank Xerox (UK) Business Services

## Description

La présente invention concerne un procédé pour la synchronisation rapide de vocodeurs couplés entre eux au moyen de dispositifs de chiffrement et de déchiffrement.

Dans les dispositifs de chiffrement utilisant des vocodeurs, la transmission de la parole entre vocodeurs a lieu de façon numérique. Les signaux de parole sont d'abord échantillonnés, puis codés par le vocodeur avant d'être appliqués au dispositif de chiffrement associé. En réception, les échantillons du signal de parole chiffrés par le dispositif de chiffrement de l'émetteur sont déchiffrés avant d'être appliqués au vocodeur de réception. Un tel dispositif est décrit dans la revue IEEE GLOBAL TELECOMMUNICATIONS CONFERENCE, Communications Broadening Technology Horizons, Conference Record, vol. 2, Houston, TX, 1-4 décembre 1986, pages 813-817, IEEE Communications Society etc., New York, US; A. TAHA et al.: "Speech encryption in linear predictive coding (LPC) system".

Pour assurer un bon fonctionnement des ensembles ainsi réalisés, il est nécessaire d'assurer à la fois la synchronisation des dispositifs de chiffrement et des vocodeurs d'émission et de réception. Dans les réalisations connues, une première phase de la synchronisation de la fonction chiffre permet d'initialiser correctement les organes de chiffrement de réception et une deuxième phase permet la synchronisation de la fonction vocodeur, cette dernière n'étant entreprise que lorsque la précédente est terminée.

Comme ces deux phases sont exécutées de façon séquentielle, sans que la seconde soit dépendante en quelque manière que ce soit de la première, la synchronisation de l'ensemble vocodeur-organe de chiffrement prend du temps.

En mode de transmission par voie radio, sur des canaux HF par exemple, compris dans la gamme de fréquence 1 à 30 Mhz, le temps moyens pour obtenir la synchronisation est de l'ordre de quelques secondes. Comme l'utilisation des vocodeurs a lieu généralement à l'alternat entre deux locuteurs, ou en mode conférence entre plusieurs locuteurs, les temps de synchronisation obtenus sont prohibitifs et représentent une réelle gêne pour les utilisateurs.

Le but de l'invention est de pallier les inconvénients précités.

A cet effet, l'invention a pour objet un procédé pour la synchronisation rapide de vocodeurs couplés entre eux au moyen de dispositifs de chiffrement et de déchiffrement du type dans lequel, la liaison entre vocodeurs est initialisée par le dispositif de chiffrement du vocodeur appelant au moyen d'une séquence chiffre comprenant au moins une séquence de synchronisation suivie, d'une transmission d'informations de décryptage et dans lequel les informations numériques de parole transmises sont organisées dans chaque vocodeur en trames numériques comprenant un nombre déterminé de bits caractérisé en ce qu'il consiste à synchroniser les trames d'information transmises par les vocodeurs sur la fin de la séquence de synchronisation des dispositifs de chiffrement et de déchiffrement, à transmettre les informations de décryptage pendant un temps égal à un multiple entier de la durée d'une trame numérique d'informations de parole transmises, et à synchroniser le vocodeur appelé sur la fin de la transmission des informations de décryptage.

D'autres caractéristiques et avantages de l'invention apparaîtront ci-après à l'aide de la description faite en regard des dessins annexés qui représentent :

- La figure 1 un système de transmission comprenant des vocodeurs couplés à des dispositifs de chiffrement et de déchiffrement mettant en oeuvre le procédé selon l'invention.
- Les figures 2a et 2b un exemple de réalisation connu d'un vocodeur.
- La figure 3 le format d'une trame vocodeur transmise par un vocodeur du type de celui représenté aux figures 2a et 2b.
- La figure 4 le format des informations de décryptage transmises par les dispositifs de chiffrement.
- La figure 5 un exemple montrant la position relative de la séquence chiffre par rapport au cadencement des trames vocodeurs qui permet d'obtenir la synchronisation des trames vocodeurs sur celles des dispositifs de chiffrement et déchiffrement.

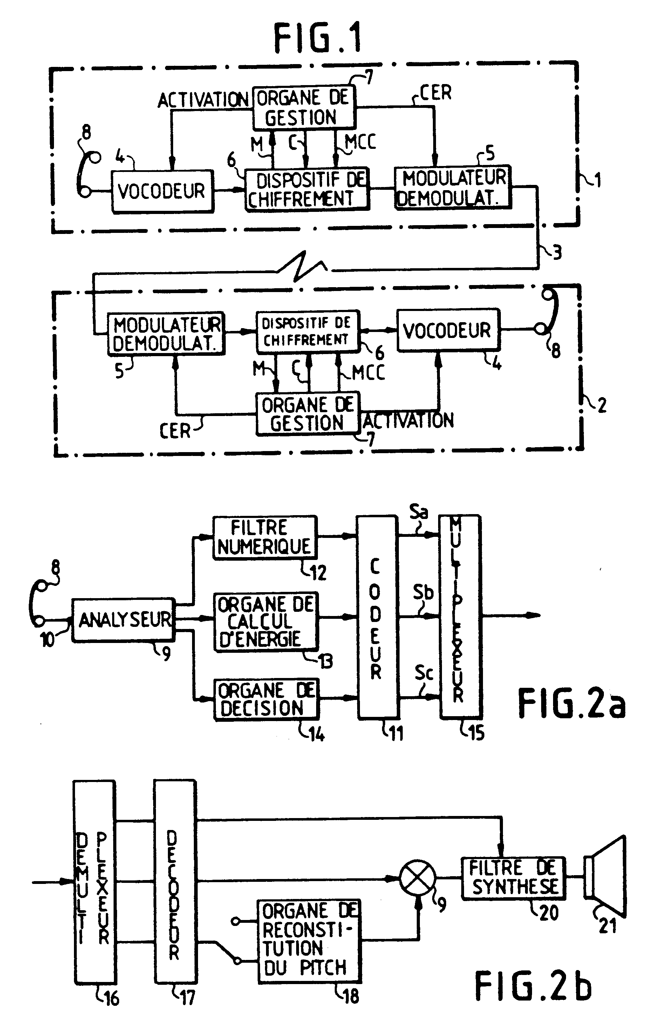

Le système de transmission qui est représenté à la figure 1 se compose de deux stations 1 et 2 communiquant entre elles à l'alternat sur un canal de transmission 3. Chaque station comprend, représentés avec les mêmes références, un vocodeur 4 qui est couplé à un modulateur-démodulateur 5 au travers d'un dispositif de chiffrement-déchiffrement 6. L'ensemble est commandé par un organe de gestion 7 composé par un microprocesseur ou tout dispositif équivalent qui assure, la gestion et le séquencement des informations transmises par chacune des stations, l'élaboration par le vocodeur 4 des informations de parole ainsi que leurs transformations par le dispositif de chiffrement 6. Un combiné téléphonique 8 permet d'appliquer la parole des utilisateurs au vocodeur 4 ainsi que sa réception.

Le schéma d'un vocodeur est représenté aux figures 2a et 2b. La partie émission qui est représentée à la figure 2a comprend un analyseur de spectre 9 qui reçoit sur une entrée 10 du vocodeur les signaux obtenus du combiné téléphonique 8. L'analyseur 9 est couplé à un codeur 11 au travers, respectivement, d'un filtre numérique 12, d'un organe de calcul d'énergie 13 et d'un organe de décision 14. L'analyseur de spectre 9 effectue toutes les 20ms environ une analyse spectrale du signal de parole en déterminant les paramètres nécessaires au filtre 12 pour modéliser au mieux le conduit vocal. L'organe de décision 14 détermine le caractère voisé ou non (pitch) du signal vocal et l'organe de calcul 13 calcule l'énergie du signal dans une fenêtre temporelle dont la longueur est déterminée par un nombre déterminé p d'échantillons fournis par l'analyseur de spectre 9. L'ensemble de ces résultats est appliqué à l'entrée du codeur 11 d'où il ressort des suites numériques de signaux binaires Sa, Sb et Sc. Ces derniers sont appliquées à l'entrée d'un multiplexeur 15 qui forme, sous la commande de l'organe de gestion 7 de la figure 1, une trame numérique composée de ces trois signaux.

Un signal vocal de synthèse est obtenu en réception de la façon représentée à la figure 2b. La partie du vocodeur qui est représentée à la figure 2b comprend, un démultiplexeur 16 de la trame numérique formée par les suites de signaux binaires Sa, Sb, Sc, un décodeur 17 de chacune des suites de signaux binaires démultiplexés, un organe 18 de reconstitution du caractère voisé ou non du signal de parole (pitch), un circuit multiplicateur 19 et un filtre de synthèse 20 couplé à un organe de réception électroacoustique ou haut-parleur 21.

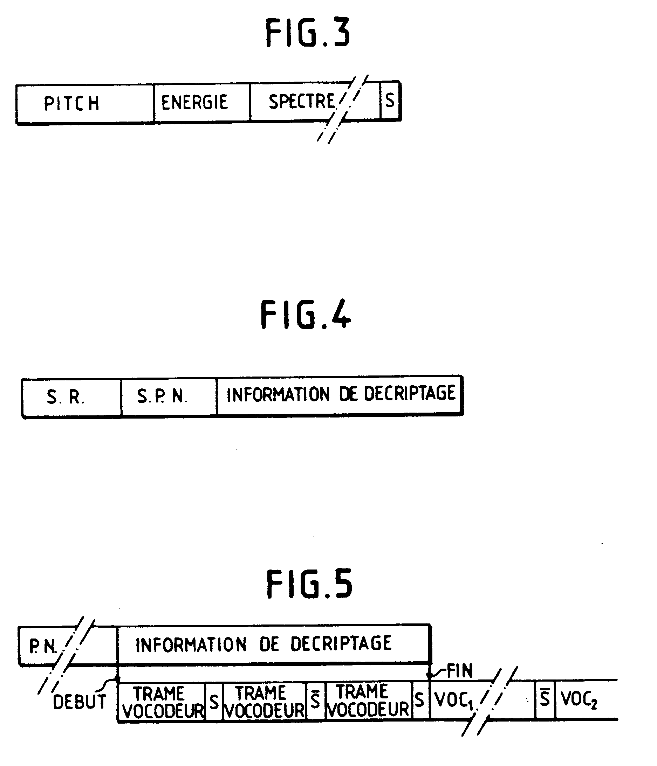

A titre d'exemple, et suivant un mode de réalisation connu qui est décrit par exemple, dans la revue THOMSON-CSF volume 18 n° 1 de mars 1986 et publié chez Gauthier Villars, l'architecture de vocodeur représentée aux figures 2a et 2b permet d'obtenir dans des fenêtres temporelles de 22,5ms des trames numériques de 54 bits dont 7 bits représentent l'indication de voisement ou de pitch, 5 bits représentent l'énergie, 41 bits représentent le spectre et 1 bit forme le bit de synchronisation. La trame numérique correspondante est représentée à la figure 3.

La synchronisation de la fonction chiffre est classiquement réalisée par la gestion d'une trame numérique du type de celle qui est représentée à la figure 4. Sur cette figure la trame est décomposée en trois séquences, une séquence de roulement SR, une séquence pseudo-aléatoire SPN encore appelée séquence PN, où PN est l'abréviation du terme anglo-saxon "pseudo noise" et une séquence comportant des informations de décryptage. La séquence de roulement est classiquement formée par une suite alternée de bits à 1 et à 0 et elle permet de reconnaître en réception la synchronisation bit des trames numériques transmises sur le canal de transmission 3. La séquence PN est classiquement obtenue par un registre à décalage de N étages comportant une entrée et une sortie, couplées entre elles au travers d'un ou plusieurs additionneurs modulo 2 recevant des informations d'opérande par une ou plusieurs prises intermédiaires du registre à décalage. Ce type de circuit engendre une séquence pseudo-aléatoire périodique de longueur $2^N$-1bits. L'opération inverse qui a lieu en réception est également exécutée au moyen d'un générateur de séquences pseudo-aléatoires identiques à celui utilisé pour l'émission et qui est synchrone avec ce dernier. C'est la reconnaissance de la séquence PN par le récepteur qui permet de reconnaître la synchronisation des trames numériques transmises sur le canal de transmission. La fin de la séquence PN marque généralement le début des informations utiles nécessaires à la synchronisation de l'organe de chiffrement du récepteur. Ces informations qui sont transmises entre le dispositif de chiffrement 6 et l'organe de gestion 7 comportent de façon connue un numéro de clé "C", des bits de marquant "M" (marquant horaire par exemple), et un mot de contrôle chiffré "MCC" qui permettent à la partie réception de vérifier après déchiffrement la validité de la synchronisation du dispositif de chiffrement et déchiffrement reçue.

Pour éviter d'avoir à effectuer deux phases de synchronisation, une première phase de synchronisation de la fonction de chiffrement et déchiffrement et une deuxième phase de synchronisation de la fonction de vocodeur qui n'est entreprise que lorsque la première phase est terminée, le procédé selon l'invention permet de référencer les trames numériques transmises par le vocodeur sur la synchronisation acquise par le dispositif de chiffrement et déchiffrement de façon à supprimer la deuxième phase de synchronisation de la fonction vocodeur. Ce but est atteint selon l'invention, en construisant un tramage de l'information numérique de synchronisation chiffre cohérent avec la longueur de la trame vocodeur élémentaire comme ceci est représenté à la figure 5. Sur la figure 5 la longueur de la zone réservée aux informations de décryptage est déterminée de façon à être un multiple de la longueur d'une trame vocodeur élémentaire. Dans ces conditions le vocodeur appelant peut être initialisé dès la fin d'émission de la séquence PN et le vocodeur de réception peut être initialisé dès la fin de la réception du dernier bit de la séquence de décryptage.

Ces différentes actions sont exécutées par une programmation convenable de l'organe de gestion 7. Celle-ci consiste à faire émettre par l'organe de gestion 7 un signal d'activation du vocodeur 4 dès la fin de la séquence PN exécutée par le dispositif de chiffrement et déchiffrement 6 et à faire déclencher le vocodeur de réception 4 par l'organe de gestion 7 de réception, dès que le dispositif de déchiffrement 6 détecte la fin des informations de décryptage.

**Revendications**

1. Procédé pour la synchronisation rapide de vocodeurs (4) couplés entre eux au moyen de dispositifs (6) de chiffrement et de déchiffrement du type dans lequel la liaison entre vocodeurs (4) est initialisée par le dispositif de chiffrement du vocodeur appelant au moyen d'une séquence chiffre comprenant au moins une séquence de synchronisation (SR, PN) suivie, d'une transmission d'information de décryptage et dans lequel les informations numériques de parole transmises sont organisées dans chaque vocodeur en trames numériques comprenant un nombre déterminé de bits caractérisé en ce qu'il consiste à synchroniser les trames d'informations transmises par les vocodeurs (4) sur la fin de la séquence (PN) de synchronisation des dispositifs (6) de chiffrement et de déchiffrement, à transmettre les informations de décryptage pendant un temps égal à un multiple entier de la durée d'une trame numérique d'informations de parole transmises et à synchroniser le vocodeur appelé sur la fin de la transmission des informations de décryptage.

2. Procédé selon la revendication 1 caractérisé en ce que les transmissions entre vocodeurs (4) ont lieu à l'alternat par trames numériques successives dès que le vocodeur appelé a acquis la synchronisation du vocodeur appelant.

3. Procédé selon les revendications 1 et 2 caractérisé en ce que la séquence de synchronisation des dispositifs de chiffrement est formée par une séquence (PN) de bits pseudo-aléatoires de durée fixe du type "pseudo-noise".

4. Procédé selon l'une quelconque des revendications 1 à 3 caractérisé en ce que la séquence de synchronisation est précédée d'une séquence (SR) de roulement.

5. Procédé selon l'une quelconque des revendications 1 à 4 caractérisé en ce que les informations de décryptage comprennent un numéro de clé, des bits de marquant et un mot de contrôle chiffré.

6. Procédé selon l'une quelconque des revendications 1 à 5 caractérisé en ce que chaque trame d'informations numérique de parole comporte une première zone de bits représentant le caractère voisé ou non du signal de parole, une deuxième zone de bits représentant l'énergie du signal de parole, et une troisième zone de bits représentant des échantillons de spectre, l'ensemble de ces trois zones étant suivi par un bit de synchronisation, la durée de la trame numérique d'informations de parole étant définie par la durée cumulée des bits composant les trois zones auquel s'ajoute la durée du bit de synchronisation.

**Claims**

1. Method for the rapid synchronisation of vocoders (4) coupled to each other by means of ciphering and deciphering devices (6) of the type in which the link between vocoders (4) is initialised by the ciphering device of the calling vocoder by means of a digit sequence comprising at least one synchronising sequence (SR, PN) followed by a transmission of deciphering information and in which the digital speech data transmitted are organised in each vocoder into digital frames comprising a given number of bits, characterised in that it consists of synchronising the data frames transmitted by the vocoders (4) at the end of the synchronising sequence (PN) of the ciphering and deciphering devices (6), transmitting the deciphering data for a time equal to an integral multiple of the duration of a digital frame of speech data transmitted, and synchronising the vocoder called at the end of transmission of the deciphering data.

2. Method according to claim 1, characterised in that the transmissions between vocoders (4) take place in half duplex operation by successive digital frames as soon as the vocoder called has acquired synchronisation with the calling vocoder.

3. Method according to claims 1 and 2, characterised in that the synchronising sequence of the ciphering devices is formed by a sequence (PN) of pseudorandom bits of fixed duration of the "pseudo-noise" type.

4. Method according to any of claims 1 to 3, characterised in that the synchronising sequence is preceded by an operating sequence (SR).

5. Method according to any of claims 1 to 4, characterised in that the deciphering data include a key number, marker bits and a coded check word.

6. Method according to any of claims 1 to 5, characterised in that each digital speech data frame comprises a first bit zone representing the voiced or unvoiced character of the speech signal, a second bit zone representing the energy of the speech signal, and a third bit zone representing spectrum samples, the combination of these three zones being followed by a synchronising bit, the duration of the digital speech data frame being defined by the total duration of the bits which make up the three zones to which is added the duration of the synchronising bit.

**Patentansprüche**

1. Verfahren zur schnellen Synchronisation von mittels Verschlüsselungs- und Entschlüsselungseinrichtungen (6) verbundenen Vocodern (4) der Art, bei welcher die Verbindung zwischen den Vocodern (4) initialisiert wird durch die Verschlüsselungseinrichtung des rufenden Vocoders mittels einer Schlüsselsequenz, die wenigstens eine Synchronisierungssequenz (SR, PN) umfaßt, auf die eine Übertragung einer Entschlüsselungsinformation folgt, und bei welcher die übertragenen digitalen Sprachinformationen in jedem Vocoder in digitalen Datenfolgen mit einer bestimmten Anzahl von Bits angeordnet werden, dadurch gekennzeichnet, daß es darin besteht, daß die von den Vocodern (4) übertragenen Datenfolgen auf das Ende der Synchronisierungssequenz (PN) für die Verschlüsselungs- und Entschlüsselungseinrichtungen (6) synchronisiert werden, daß die Entschlüsselungsinformationen während einer Zeit übertragen werden, die gleich einem ganzzahligen Vielfachen der Dauer einer digitalen Datenfolge von übertragenen Sprachinformationen ist, und daß der gerufene Vocoder auf das Ende der Übertragung der Entschlüsselungsinformationen synchronisiert wird.

2. Verfahren nach Anspruch 1, dadurch gekennzeichnet, daß die Übertragungen zwischen den Vocodern (4) wechselseitig mit aufeinanderfolgenden digitalen Daten erfolgen, sobald der gerufene Vocoder die Synchronisation des rufenden Vocoders angenommen hat.

3. Verfahren nach Anspruch 1 und 2, dadurch gekennzeichnet, daß die Synchronisierungssequenz der Verschlüsselungseinrichtung aus einer Sequenz (PN) pseudo-zufälliger Bits einer bestimmten Dauer vom Typ einer "Pseudonoise"-Sequenz gebildet wird.

4. Verfahren nach einem der Ansprüche 1 bis 3, dadurch gekennzeichnet, daß der Synchronisierungssequenz eine Wechselsequenz (SR) vorangeht.

5. Verfahren nach einem der Ansprüche 1 bis 4, dadurch gekennzeichnet, daß die Entschlüsselungsinformationen eine Schlüsselzahl, Markierungsbits und ein Chiffrierkontrollwort enthalten.

6. Verfahren nach einem der Ansprüche 1 bis 5, dadurch gekennzeichnet, daß jede digitale Datenfolge von Sprachinformationen aus einen ersten Bereich von Bits enthält, die wiedergeben, ob das Sprachsignal stimmhaft oder stimmlos ist, einen zweiten Bereich von Bits, die die Energie des Sprachsignals wiedergeben, und einen dritten Bereich von Bits, die Abtastwerte des Frequenzspektrums wiedergeben, wobei auf diese drei Bereich von Bits ein Synchronisierungsbit folgt und die Dauer der digitalen Datenfolge von Sprachinformationen bestimmt wird durch die Gesamtdauer der drei Bereiche von Bits sowie hinzuaddiert die Dauer des Synchronisierungsbits.

# FIG.1

# FIG.2a

# FIG.2b

# FIG.3

| PITCH | ENERGIE | SPECTRE // | S |
|-------|---------|------------|---|

# FIG.4

| S. R. | S. P. N. | INFORMATION DE DECRIPTAGE |
|-------|----------|---------------------------|

# FIG.5

| P.N. // | INFORMATION DE DECRIPTAGE |
|---------|---------------------------|

DEBUT | TRAME VOCODEUR | S | TRAME VOCODEUR | S̄ | TRAME VOCODEUR | S | VOC₁ // | S̄ | VOC₂

FIN